# EUROPÄISCHE PATENTANMELDUNG

(11) **EP 0 824 283 A2**
(43) Veröffentlichungstag der Anmeldung: **18.02.1998**
(21) Anmeldenummer: 97113951.4
(22) Anmeldetag: 13.08.1997
(51) Int. Cl.: H02G 3/06

(54) **Vorrichtung zum Befestigen von Leitungen, insbesondere von Kabelschutzschläuchen**

(30) Priorität: 13.08.1996 DE 19632544
(71) Anmelder: Schuchardt, Helmut, Dipl.-Ing. (FH), 74889 Sinsheim (DE)
(72) Erfinder: Schuchardt, Helmut, Dipl.-Ing. (FH), 74889 Sinsheim (DE)
(74) Vertreter: Schmitt, Meinrad, Dipl.-Ing.

(57) **Zusammenfassung**

Eine Vorrichtung zum Befestigen von Leitungen (1), insbesondere von Kabelschutzschläuchen, mit einem Aufnahmekörper (2) zur Aufnahme der Leitung (1) und einer im Aufnahmekörper (2) anordenbaren Hülse (3), wobei die Hülse (3) beweglich gelagerte Befestigungselemente (4) zum Festlegen der Leitung (1) aufweist erfordert einen geringen Fertigungs- und Montageaufwand und ermöglicht dennoch einen korrekten Einschub der Leitung indem der Aufnahmekörper (2) an seinem Innenumfang Zentrierelemente (5) zum Zentrieren der in den Aufnahmekörper (2) eingeführten Leitung (1) aufweist.

## Beschreibung

Die vorliegende Erfindung betrifft eine Vorrichtung zum Befestigen von Leitungen, insbesondere von Kabelschutzschläuchen, mit einem Aufnahmekörper zur Aufnahme der Leitung und einer im Aufnahmekörper anordenbaren Hülse, wobei die Hülse beweglich gelagerte Befestigungselemente zum Festlegen der Leitung aufweist.

Als Leitungen werden Vorrichtungen bezeichnet, die zum Fortleiten eines Stoffes oder einer Energie von der Erzeugungs- zur Verbrauchsstelle dienen. Im Hinblick auf elektrische Leitungen existieren zahllose Ausführungsformen, wobei isolierte elektrische Leiter oder Kabel einzeln oder im Bündel in der Leitung angeordnet sind und bspw. einem Anschluß an einem Schaltschrank oder an einer Maschine zugeführt werden sollen. Die Leitung selbt kann ein Gummischlauch, eine textile Kordelbeflechtung oder dgl. sein oder aus anderweitigem Kunststoff bestehen. Eine Montage der Leitungen, unabhängig davon, ob nun Elektrizität oder Materie transportiert wird, erfolgt unter Zuhilfenahme Von Befestigungsvorrichtungen. Diese können bspw. zur Realisierung eines Anschlusses der Leitung an einen Verbraucher, zur Verbindung mit einer anderen Leitung oder auch bei Zuordnung entsprechender Zusatzbauteile zur Verlegung der Leitung verwendet werden. Allgemein ist eine schnelle und sichere Montage der Leitung wünschenswert.

Eine Vorrichtung der in Rede stehenden Art, welche ein aufwendiges Eindrehen einer Leitung in einen Verschraubungskörper beseitigt, ist bspw. aus den eingetragenen Unterlagen des deutschen Gebrauchsmusters G 93 14 014.2 bekannt. Die dortige Befestigungsvorrichtung für Kabelschutzschläuche weist einen Aufnahmekörper auf, in dem eine Hülse angeordnet ist. Die Hülse weist nach innen gerichtete Rastarme auf, welche mit ihren freien Enden in Vertiefungen der Kabelschutzschläuche eingreifen. Der dortige Aufnahmekörper bildet eine Aufnahmetasche aus, an deren äußerer Innenwand sich die Hülse erstreckt. Der Kabelschutzschlauch wird in die Aufnahmetasche derart eingeführt, daß die Rastarme der Hülse zunächst über die Dauer des Einschubes in eine Aussparung gedrückt werden und dann in über den Außenumfang verteilte Vertiefungen der Leitung eingreifen. Zwei diametral angeordnete Rastarmpaare mit je zwei in axialer Richtung hintereinandergeordneten Rastarmen sind vorgesehen. Nachdem das Einschubende des Kabelschutzschlauches den Rastarmbereich passiert hat, erfolgt noch ein Vorschub bis zum Ende der Aufnahmetasche. Ein korrekter Einschub Leitung in der Aufnahmetasche wird durch deren konischen Verlauf zu ihrem geschlossenen Ende hin erreicht.

Der Herstellungsaufwand für den Aufnahmekörper der bekannten Vorrichtung ist im Hinblick auf eine recht komplizierte Form hoch. Des weiteren ist die Montage des Kabelschutzschlauches dahingehend erschwert, daß Leitung und Leitungsinhalt separiert werden müssen und der Schlauch quasi in die, im Querschnitt ringartige Aufnahmetasche 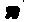 eingefädelt" werden muß. Außerdem wird die Anwendung der Vorrichtung durch den Zwang zur Separierung der Leitung und des Leitungsinhaltes stark eingeschränkt.

Ausgehend von diesem Stand der Technik liegt der Erfindung die Aufgabe zugrunde, eine Vorrichtung der in Rede stehenden Art anzugeben, die einen geringen Fertigungs- und Montageaufwand erfordert und dennoch einen korrekten Einschub der Leitung ermöglicht.

Die voranstehende Aufgabe wird durch die Merkmale des Patentanspruches 1 gelöst. Danach ist eine Vorrichtung der in Rede stehenden Art derart ausgestaltet, daß der Aufnahmekörper an seinem Innenumfang Zentrierelemente zum Zentrieren der in den Aufnahmekörper eingeführten Leitung aufweist.

Erfindungsgemäß ist erkannt worden, daß der Fertigungsaufwand im Hinblick auf die Formgebung des Aufnahmekörpers verringert werden kann, wenn auf eine Aufnahmetasche, innerhalb der die Leitung festgelegt ist, verzichtet werden kann. Weiter ist erkannt worden, daß die Ausbildung einer Aufnahmetasche dann in Wegfall geraten kann, wenn gewährleistet ist, daß die Leitung innerhalb des Aufnahmekörpers, gerade nach dem Passieren der Hülse mit den Befestigungselementen, korrekt eingeschoben werden kann, ohne den Innenraum des Aufnahmekörpers mit ggf. vorgesehenen Durchtrittsöffnungen für den Leitungsinhalt zu behindern. Im weiteren ist erkannt worden, daß ein korrekter Einschub der Leitung dann ermöglicht wird, wenn am Innenumfang des Aufnahmekörpers Zentrierelemente vorgesehen sind, die einem schiefen Verlauf der Leitung entgegenwirken und diese ständig zentrieren. Außerdem ist erkannt worden, daß eine beträchtliche Reduktion des Montageaufwandes erreicht wird, wenn die Leitung einfach in die Anfangsöffnung des Aufnahmekörpers bzw. in die Hülse eingeschoben wird und im weiteren durch die Zentrierelemente selbsttätig zentriert wird, anstatt - wie beim Stand der Technik - in die ringförmige Aufnahmetasche 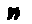 eingefädelt" zu werden. Darüberhinaus eröffnet sich die Möglichkeit, die erfindungsgemäße Vorrichtung auch in anderen Bereichen als im Bereich der Kabelschutzschläuche anzuwenden. Da der Leitungsinhalt nicht mehr von der Leitung separiert wird, wäre bspw. auch eine Anwendung im Laborbereich denkbar, wo Anschlüsse von Leitungen für gasförmige oder flüssige Medien oder für Schüttgut erforderlich sind und eine Befestigung eben durch eine erfindungsgemäße Vorrichtung realisiert werden könnte, ohne daß der Aufnahmekörper den Leitungsinhalt kontaktiert.

Gemäß einer besonders einfachen Ausführungsform könnten die Zentrierelemente dem im Aufnahmekörper vorgesehenen Anordnungshereich für die Hülse im wesentlichen nachgeordnet werden. Auf diese Weise wird zunächst eine Führung der Leitung in der Hülse ermöglicht und anschließend das die Hülse passierende Einschubende nach Verlassen des Anordnungsbereiches direkt zentriert. Je nach erforderlichem Lastaufnahmevermögen des Aufnahmekörpers oder je nach örtlichen Installationsgegebenheiten könnte der Aufnahmekörper auch Zentrierelemente vor und nach dem Anordnungsbereich für die Hülse aufweisen.

Damit eine gleichmäßige Führung bzw. Zentrierung der Leitung realisiert wird, könnten die Zentrierelemente voneinander beabstandet und über den Innenumfang des Aufnahmekörpers verteilt angeordnet sein. Bei kreisförmigen Querschnitten von Aufnahmekörper, Leitung und Hülse könnten bspw. drei um 180° versetzte Zentrierelemente vorgesehen sein, so daß die Bewegungsrichtung der Leitung ausreichend definiert ist. Bevorzugt werden vier um 90° versetzte Zentrierelemente vorgesehen, um ein Abweichen von der zentrierten Bewegungsbahn noch wirksamer auszuschließen.

Im Hinblick auf die Herstellung eines für die Ausübung der Zentrierfunktion ausreichend geringen Abstandes zwischen Zentrierelementen und eingeschobener Leitung und im Hinblick auf einen wirksamen Kontakt zur Leitungsoberfläche im Zentrierfall erstrecken sich die Zentrierelemente orthogonal zur Längsachse des Aufnahmekörpers. Der rechtwinklige Angriff könnte dadurch unterstützt werden, daß der Querschnitt der Zentrierelemente derart gestaltet ist, daß deren freie, nicht am Aufnahmekörper festgelegte Enden zur Längsachse des Aufnahmekörpers hin konisch verlaufen und punkt- oder linienförmig im Zentrierfall die Leitung kontaktieren. Auf diese Weise wird direkt und ohne Verzögerung zentriert, während bei einer ebenen Kontaktfläche zunächst der eine, dann der andere Kantenbereich kontaktiert werden könnte, bis der Zentriervorgang zielgerichtet zur Längsachse hin stattfinden kann.

Zur Gewährleistung eines über die Länge hülsenfreier Bereiche oder eines hülsenfreien Bereiches des Aufnahmekörpers kontinuierlichen Zentriervorganges könnten sich die Zentrierelemente über einen längeren vorgegebenen Bereich koaxial zur Längsachse des Aufnahmekörpers erstrecken. Die Vorgabe des Bereiches richtet sich zweckmäßigerweise nach den Abmessungen der im Aufnahmekörper angeordneten Hülse. Denkbar wäre bspw. eine Ausführungsform einer Hülse, wobei die sich im wesentlichen koaxial zur Längsachse des Aufnahmekörpers erstreckenden Befestigungselemente der Hülse unterschiedlich lang sind. In diesem Fall würden auch die Zentrierelemente unterschiedlich lang sein, wobei das längste Zentrierelement in etwa dem kürzesten Befestigungselement zugeordnet wäre.

Damit die Leitung auch im Bereich der Zentrierelemente problemlos in den Aufnahmekörper eingeschoben werden kann, sind die Querschnittsabmessungen der Zentrierelemente auf den Außenquerschnitt der Leitung derart abzustimmen, daß zumindest ein geringes Spiel zwischen den Zentrierelementen und der Leitung verbleibt.

Ein auf die Ausgestaltung des Außenumfangs des Aufnahmekörpers gerichtetes Ausführungsbeispiel sieht vor, dort Vertiefungen und/oder Angriffsflächen zum Ansatz eines Werkzeuges auszubilden. Die Vertiefungen und die Angriffsflächen dienen einer bequemeren Handhabbarkeit der erfindungsgemäßen Vorrichtung bei deren Installation oder Demontage.

Im Hinblick auf die bevorzugte Anwendung der erfindungsgemäßen Vorrichtung, nämlich den Anschluß eines Kabelschutrschlauches an eine Maschine oder einen Schaltschrank zu ermöglichen, ist es notwendig, einen Befestigungsabschnitt vorzusehen, welcher mit dem Schaltschrank oder der Maschine, ggf. über ein weiteres Anschlußbauteil, zusammenwirkt. Der Befestigungsabschnitt könnte dem Aufnahmekörper zugeordnet oder als integraler Bestandteil des Aufnahmekörpers ausgebildet sein. Je nach Anwendungsfall könnte der Befestigungsabschnitt einen vom übrigen Aufnahmekörper verschiedenen Querschnitt, insbesondere einen kleineren Querschnitt, aufweisen. Der Querschnittswechsel würde dann das Ende des Einschubvorganges der Leitung definieren. In diesem Fall würden sich die Zentrierelemente zwischen dem Anordnungsbereich für die Hülse und dem Befestigungsabschnitt erstrecken. Bei gleichbleibendem Querschnitt von Aufnahmekörper und Befestigungsabschnitt wäre am Innenumfang des Aufnahmekörpers - unmittelbar hinter den Zentrierelementen - ein Stoppelement vorzusehen, welches seinerseits das Ende des Einschubvorganges und eine Begrenzung für die Zentrierelemente definiert. Der Befestigungsabschnitt könnte bspw. mit einem Außengewinde in Form eines Panzer- oder DIN-Gewindes zum Einschrauben in ein entsprechendes Innengewinde versehen sein und in verschiedenen Größen vorliegen. Alternativ wären am Befestigungsabschnitt auch anderweitige Verbindungsmittel, wie Rastelemente oder Bajonettverschlüsse, denkbar.

Zur besseren Kraftübertragung könnten die Angriffsflächen für das Werkzeug dem Befestigungsabschnitt unmittelbar vorgeordnet sein. Damit das Werkzeug beliebig angesetzt werden kann, könnten die Angriffsflächen vorzugsweise im Sinne eines Ringes aneinandergeordnet sein und sich über den gesamten Außenumfang des Aufnahmekörpers erstrecken. Als Werkzeug käme ein Sechskantschlüssel oder auch eine Rohrzange in Betracht.

Wie der Aufnahmekörper könnte auch die Hülse ein im wesentlichen rohrförmiges Bauteil sein. Die Hülse könnte einen in den Aufnahmekörper einzuführenden ersten Abschnitt mit Befestigungselementen und einen mit dem Aufnahmekörper bevorzugt bündig abschließenden zweiten Abschnitt aufweisen. Der zweite Abschnitt könnte der lösbaren oder unlösbaren Verbindung mit dem Aufnahmekörper dienen und entsprechende Mittel aufweisen. Eine unlösbare Rastverbindung könnte bspw. dadurch ausgebildet werden, daß die Hülse mit einem am Außenumfang angeordneten Rundsteg und der Aufnahmekörper mit einer am Innenumfang angeordneten Rundnut ausgestattet ist. Alternativ könnte die Hülse samt Leitung aus dem Aufnahmekörper auch entfernbar sein, wobei bspw. ein zusätzlicher Abschlußdeckel für den notwendigen Zusammenhalt während des Zusammenwirkens von Aufnahmekörper und Hülse sorgt.

Damit die Bewegbarkeit der Leitung im zweiten Abschnitt der Hülse gewährieistet ist, ist der Innenquerschnitt der Hülse auf den Außenquerschnitt der Leitung derart abgestimmt, daß zumindest ein geringes Spiel zwischen der Leitung und dem zweiten Abschnitt der Hülse verbleibt. Die Bewegbarkeit der Leitung im ersten Abschnitt der Hülse ist in Einführrichtung aufjeden Fall durch die Beweglichkeit der Befestigungselemente gegeben.

Die im ersten Hülsenabschnitt angeordneten Befestigungselemente könnten sich gemäß einem bevorzugten Ausführungsbeispiel zunächst koaxial zur Längsachse der Hülse erstrecken, welche im montierten Zustand der Hülse mit der Längsachse des Aufnahmekörpers identisch ist, und nach innen gerichtete freie Enden aufweisen. Die Befestigungselemente könnten dadurch ausgebildet sein, daß der erste Hülsenabschnitt koaxiale, zum freien Ende des ersten Abschnittes hin öffnende, um den Innenumfang verteilte Ausnehmungen aufweist und daß die zwischen den Ausnehmungen verbleibenden Materialstreifen die Befestigungselemente ausbilden. Dabei sind zumindest die freien Enden der Befestigungselemente bzw. der Materialstreifen nach innen gerichtet. Die durch die Ausnehmungen voneinander beabstandeten Befestigungselemente sind vorzugsweise im Sinne von federnden Rastarmen ausgeführt und integrale Bestandteile der Hülse. Auf diese Weise kann auf Anlenkelemente verzichtet und die erfindungsgemäße Vorrichtung kostengünstig gestaltet werden.

Die Ausbildung der Hülse mit den von Ausnehmungen flankierten Befestigungselementen ist im Hinblick auf die Montage der Hülse im Aufnahmekörper von Bedeutung. Die Umfangsabmessung der im ersten Abschnitt der Hülse entspannten Befestigungselemente kann kurzzeitig durch leichtes Zusammendrücken verringert werden und bequem in den Aufnahmekörper eingeführt werden. Zudem ist durch die Orientierung der freien Enden der Befestigungselemente aus sich heraus ein konischer Verlauf und daher ein leichtes Einführen der Hülse in den Aufnahmekörper gewährleistet. Bevorzugt wird der Abstand der Befestigungselemente bzw. die Breitenabmessung der Ausnehmungen weitgehend konstant gehalten. Besonders bei rotationssymmetrischen Querschnitten, insbesondere bei Kreisquerschnitten, liegen je zwei Befestigungselemente einander gegenüber. Je nach Querschnitt und Zweck der Leitung und/oder je nach Belastung durch die Leitung könnten zwei bis acht Befestigungselemente vorgesehen sein. Bei Kabelschutzschläuchen haben sich sechs Befestigungselemente als günstig herausgestellt.

Damit nun eine besonders wirksame Befestigung der Leitung erfolgen kann, sind die nach innen gerichteten freien Enden der Befestigungselemente spitzwinklig ausgeführt und zur Erhöhung der Spannung im Befestigungszustand ist die Innenseite jedes Befestigungselementes konkav und die Außenseite konvex - jedes Befestigungselement also insgesamt nach innen gebogen - ausgebildet.

Bei dem oben beschriebenen Ausführungsbeispiel der Hülse mit den beiden Abschnitten könnten der erste und der zweite Abschnitt in etwa gleichlang sein, wobei sowohl ein fester Sitz der Hülse als auch eine funktionssichere Befestigung der Leitung gewährleistet sind. Im Falle einer Rundnut-Rundsteg-Verbindung zwischen Aufnahmekörper und Hülse könnte der Steg in etwa im ersten Viertel des zweiten Abschnittes der Hülse angeordnet sein. Der zweite Abschnitt könnte auch etwas länger sein als der erste Abschnitt, insbesondere dann, wenn eine hohe Stabilität der Verbindung zum Aufnahmekörper erforderlich ist.

Im Hinblick auf geringe Herstellungskosten und eine einfache Montage innerhalb des Aufnahmekörpers ist weiter von wesentlicher Bedeutung, daß die Längenabmessung der Hülse bei voller Wirksamkeit der Befestigungselemente nur einen Bruchteil der Längenabmessung des Aufnahmekörpers ausmacht. Bei einem Aufnahmekörper mit einem Befestigungsabschnitt macht die Länge der Hülse bei bevorzugten Ausgestaltungen in etwa oder etwas mehr als die Hälfte der bis zum Befestigungsabschnitt reichenden Längenabmessung des Aufnahmekörpers aus.

Die Befestigung der Leitung mittels der Hülse könnte über zwei grundsätzliche Prinzipien realisiert werden. Zum einen kann eine Leitung vorliegen, an deren Außenumfang Vertiefungen angeordnet sind. Dies ist beispielsweise bei Rundschläuchen, Rillenschläuchen und Gewindeschläuchen der Fall. Sind Vertiefungen vorhanden, kommt es zur formschlüssigen, ggf. auch zur kraftschlüssigen Verbindung, wobei die freien Enden der Befestigungselemente in die Vertiefung eingreifen. Zur Ausbildung einer kraftschlüssigen Verbindung kann es dann kommen, wenn die radiale Abmessung der ggf. spitzwinkligen Enden der Befestigungselemente zumindest geringfügig größer ist als der Abstand zwischen dem Basisbereich der Vertiefung und dem Innenumfang der Hülse. Mit der erfindungsgemäßen Vorrichtung können auch - im Gegensatz zu dem in der Einleitung zitierten Stand der Technik - Leitungen mit glatten Oberflächen befestigt werden. Es kommt in diesem Fall und auch im Falle des Kraftschlusses bei Leitungen mit Vertiefungen darauf an, daß die Materialfestigkeit der Leitungsoberfläche geringer ist als die der freien Enden der Befestigungselemente. Die Rastarme bzw. die spitzen Enden der nach innen gebogenen Befestigungselemente, deren radiale Abmessung zumindest geringfügig größer ist als der Abstand zwischen der Leitungsoberfläche und dem Innenumfang der Hülse, werden in Einführrichtung nach außen bewegt und schleifen auf der Oberfläche der Leitung entlang. Wird die Leitung entgegen der Einführrichtung bewegt, bohren sich die spitzwinkligen freien Enden der Befestigungselemente in die Leitungsoberfläche ein, welche nunmehr wirksam festgelegt ist.

Die Hülse und der Aufnahmekörper mit dem Befestigungsabschnitt werden vorzugsweise aus Kunststoff im Wege des Spritzgußverfahrens hergestellt. Der erfindungsgemäßen Vorrichtung könnte zur einfachen Realisierung des Anschlusses eine drehbare Spannmutter oder ein drehbarer Anschlußhalter zugeordnet sein, die insbesondere am Befestigungsabschnitt angeordnet sind.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des angeführten Ausführungsbeispiels der Erfindung anhand der Zeichnung werden im allgemeinen bevorzugte Ausgestaltungen und Weiterbildungen der Lehre erläutert. In der Zeichnung zeigen
- Fig. 1: in schematischer, perspektivischer, teils ländsgeschnittener Darstellung ein Ausführungsbeispiel der erfindungsgemäßen Vorrichtung,
- Fig. 2: in schematischer, längsgeschnittener Darstellung, verkleinert, den Aufnahmekörper aus Fig. 1,
- Fig. 3: in schematischer, entlang der Linie A-A quergeschnittener Darstellung den Aufnahmekörper aus Fig. 2,
- Fig. 4: in schematischer, längsgeschnittener Darstellung, vergrößert, die Hülse aus Fig. 1,
- Fig. 5: in schematischer Darstellung, verkleinert, eine Seitenansicht der Hülse aus Fig. 4 in Blickrichtung B,
- Fig. 6: in schematischer, längsgeschnittener Darstellung, vergrößert, ein Detail bezüglich der Verbindung von Aufnahmekörper und Hülse aus den Fig. 2 und 4.
- Fig. 7: in schematischer Darstellung, verkleinert, eine Vorderansicht eines Abschnitts einer Leitung mit Vertiefungen.

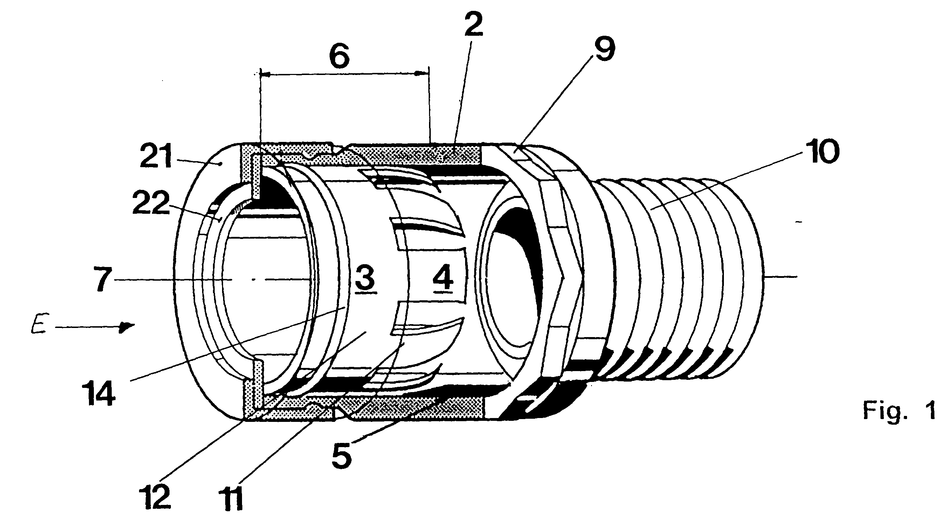

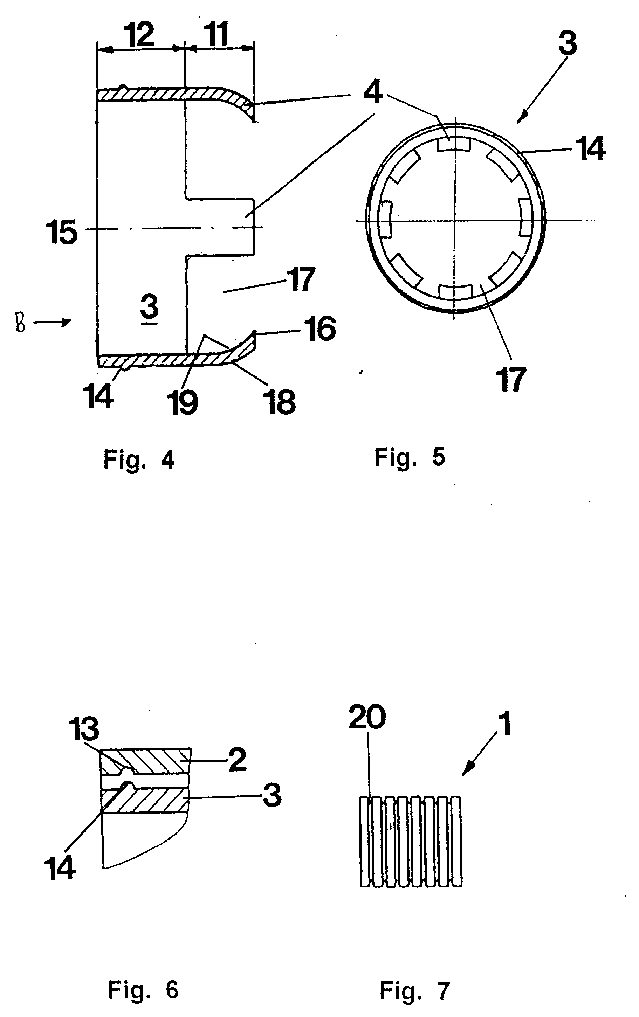

In Fig. 1 ist perspektivisch und teilweise längsgeschnitten eine Vorrichtung zum Befestigen von Leitungen 1 dargestellt. Der Abschnitt einer Leitung 1 geht aus Fig. 7 hervor. Es handelt sich hierbei um einen Kabelschutzschlauch. Die Vorrichtung weist einen Aufnahmekörper 2 zur Aufnahme der Leitung 1 und eine im Aufnahmekörper 2 angeordnete Hülse 3 auf, welche mit beweglich gelagerten Befestigungselementen 4 zum Festlegen der Leitung 1 ausgetattet ist.

Erfindungsgemäß weist der Aufnahmekörper 2 an seinem Innenumfang Zentrierelemente 5 zum Zentrieren der in den Aufnahmekörper 2 einzuführenden Leitung 1 auf.

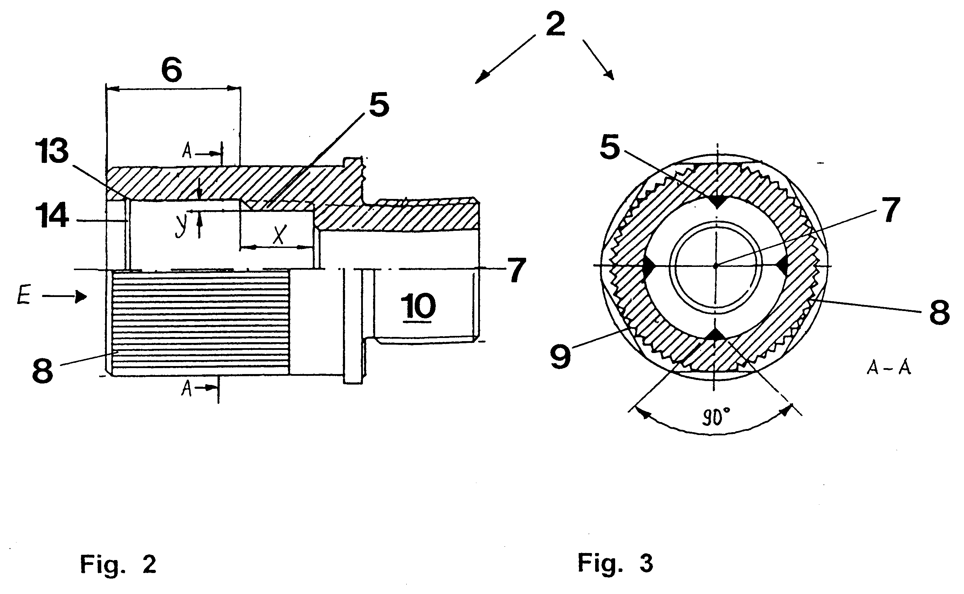

Wie in den Fig. 1 und 2 veranschaulicht, sind die Zentrierelemente 5 einem Anordnungsbereich 6 des Aufnahmekörpers 2 für die Hülse 3 im wesentlichen nachgeordnet. In dem hier gezeigten Ausführungsbeispiel ragen die Zentrierelemente 5 geringfügig in den Anordnungsbereich 6 für die Hülse 3 hinein, wobei eine Anpassung an die baulichen Gegebenheiten durch eine Abwinklung der zum Anordnungsbereich 6 weisenden Enden der Zentrierelemente 5 erfolgt. Die Abweichungen der Darstellungen der Zentrierelemente 5 in den Fig. 1 und 2 sind zu vernachlässigen.

In Fig. 3 ist gezeigt, daß die Zentrierelemente 5 voneinander beabstandet und über den Innenumfang des Aufnahmekörpers 2 verteilt angeordnet sind. Es sind vier um 90° versetzte Zentrierelemente 5 vorgesehen, welche sich orthogonal zur Längsachse 7 des Aufnahmekörpers 2, nach innen orientiert, erstrecken. Der Querschnitt der Zentrierelemente 5 ist im wesentlichen dreieckig, wobei die einzige freie Ecke der Dreieckform einen Winkel von 90° einschließt und zur Längsachse 7 weist. Dreidimensional betrachtet ergibt sich ein in etwa prismenförmiges Zentrierelement 5 mit drei Seiten, wobei die zwei, sich von der festgelegten Seite aus erstreckenden Seiten jeweils im Winkel von 45° zu dieser angeordnet sind. Aus Fig. 2 wird deutlich, daß sich die Zentrierelemente 5 über einen vorgegebenen Bereich X koaxial zur Längsachse 7 des Aufnahmekörpers 2 erstrecken. Die maximale, orthogonal auf die Längsachse 7 bezogene Querschnittsabmessung Y der Zentrierelemente 5 ist auf den Außenquerschnitt der Leitung 1 derart abgestimmt, daß zumindest ein zur Bewegung der Leitung 1 im Aufnahmekörper 2 erforderliches Spiel verbleibt.

Aus den Fig. 2 und 3 geht hervor, daß der Aufnahmekörper 2 am Außenumfang Vertiefungen 8 aufweist, die sich koaxial zur Längachse 7 des Aufnahmekörpers 2 erstrecken. Des weiteren ist aus den Fig. 1 und 3 erkennbar, daß am Außenumfang des Aufnahmekörpers 2 Angriffsflächen 9 zum Ansatz eines Werkzeuges vorgesehen sind. Abgewandt von dem Anordnungsbereich 6 für die Hülse 3 ist ein Befestigungsabschnitt 10 vorgesehen, dessen kreisförmiger Querschnitt kleiner ist als der ebenfalls kreisförmige Querschnitt des Bereiches des Aufnahmekörpers 2, in dem sich die Hülse 3 und die Zentrierelemente 5 befinden. Der Befestigungsabschnitt 10 weist ein nicht näher bezeichnetes Außengewinde auf.

Die Angriffsflächen 9 zum Angriff eines Werkzeuges sind ringförmig aufeinanderfolgend angeordnet und gemeinsam mit einem nicht näher bezeichneten Bund dem Befestigungsabschnitt 10 vorgeordnet. Wie aus Fig. 2 zu entnehmen, reicht der Befestigungsabschnitt 10 bis in den einen größeren Außendurchmesser aufweisenden Bereich des Aufnahmekörpers 2 und definiert das Ende des Einschubes der Leitung 1 in Richtung des Pfeils E. Zudem ergibt sich eine vorteilhafte Verstärkung des Übergangsbereiches, in dem auch die Angriffsflächen 9 angeordnet sind. Die Zentrierelemente 5 enden am Befestigungsabschnitt 10.

Aus den Fig. 1, 4 und 5 ergibt sich, daß die Hülse 3 rohrförmig ausgebildet ist und einen in den Aufnahmekörper 2 einzuführenden ersten Abschnitt 11 und einen bündig mit dem Aufnahmekörper 2 abschließenden zweiten Abschnitt 12 aufweist. Im hier gezeigten Ausführungsbeispiel ist die Hülse 3 mit dem Aufnahmekörper 2 im Bereich des zweiten Abschnittes 12 der Hülse 3 unlösbar verbunden. Die in Fig. 6 veranschaulichte unlösbare Verbindung wird durch eine Rundnut 13 des Aufnahmekörpers 2 und einen Rundsteg 14 der Hülse 3 realisiert.

Der Innenquerschnitt des zweiten Abschnitts 12 der Hülse 3 ist auf den Außenquerschnitt der Leitung 1 derart abgestimmt, daß zumindest ein zur Einführung der Leitung 1 in die Hülse 3 notwendiges Spiel verbleibt. Im ersten Abschnitt 11 ist eine derartige Maßnahme wegen der Beweglichkeit der Befestigungselemente 4 nicht nötig, die aufjeden Fall in Einschubrichtung E die Bewegung der Leitung 1 ermöglicht.

Die Fig. 1 und 4 zeigen, daß sich die Befestigungselemente 4 innerhalb des ersten Abschnittes 11 in etwa koaxial zur Längsachse 15 der Hülse 3, welche in Fig. 1 identisch ist mit der Längsachse 7, erstrecken und nach innen gerichtete freie Enden 16 aufweisen. Der erste Abschnitt 11 der Hülse 3 weist nun neben den Befestigungselementen 4 auch Ausnehmungen 17 auf, welche eine konstante Beabstandung der Befestigungselemente 4 vorgeben und zum freien Ende des ersten Abschnitts 11 hin öffnen. Der einfachen Darstellung halber sind in Fig. 4 nur drei Befestigungselemente 4 gezeigt, obwohl in diesem Ausführungsbeispiel tatsächlich acht als federnde Rastarme ausgeführte Befestigungselemente 4 vorgesehen sind. Wie in den Fig. 1 und 5 veranschaulicht ist, sind je zwei Befestigungselemente 4 diametral angeordnet. Die Befestigungselemente 4 sind integrale Bestandteile der Hülse 3 und sind - wie in Fig. 4 gezeigt - gebogen ausgebildet, wobei die Außenfläche 18 konvex und die Innenfläche 19 konkav ausgeführt sind. Die nach innen gerichteten freien Enden 16 der Befestigungselemente 4 sind spitzwinklig. Beim Einschieben der Leitung 1 in Einführrichtung E werden die Befestigungselemente 4 auseinanderbewegt. Ein Zurückziehen der Leitung wird dadurch verhindert, daß die Befestigungselemente 4 aufgrund ihrer Formgebung nach innen gedrückt werden, in die Leitung 1 eingreifen und diese nicht mehr freigeben.

Den Fig. 1 und 4 ist zu entnehmen, daß der erste Abschnitt 11 geringfügig kürzer ist als der zweite Abschnitt 12 der Hülse 3. Beim Vergleich der Längenabmessung der Hülse 3 und der den Anordungsbereich 6 und den Erstreckungsbereich der Zentrierelemente 5 umfassenden Längenabmessung des Aufnahmekörpers 2 ergibt sich, daß die Hülse 3 geringfügig über die Hälfte der vorbeschriebenen Längenabmessung des Aufnahmekförpers 2 hinausgeht.

In dem hier in Rede stehenden Ausführungsbeispiel erfolgt die Festlegung der Leitung 1 durch den Eingriff der freien Enden 16 der Befestigungselemente 4 in die in Fig. 7 gezeigten, in Form von Rillen vorliegenden Vertiefungen 20 am Außenumfang der Leitung 1.

Aus der Zusammenbauzeichnung der erfindungsgemäßen Vorrichtung in Fig. 1 ist des weiteren ersichtlich, daß auf den Aufnahmekörper 2 ein Abschlußdeckel 21 aufgesetzt ist, dem eine Gummidichtung 22 vorgeordnet ist.

Hinsichtlich weiterer, in den Figuren nicht gezeigter Merkmale wird auf den allgemeinen Teil der Beschreibung verwiesen.

Abschließend sei darauf hingewiesen, daß die erfindungsgemäße Lehre nicht auf das voranstehend erörterte Ausführungsbeispiel eingeschränkt ist. Vielmehr sind die unterschiedlichsten Querschnittsabmessungen und Anwendungsbereiche möglich. Ebenso kann die erfindungsgemäße Vorrichtung gerade im Hinblick auf das Verlegen von Leitungen ausgenutzt werden, wozu dann die Leitung in der gewünschten Länge durch den Aufnahmekörper hindurchgeführt wird und am Aufnahmekörper geeignete Verlege-Befestigungsmittel vorgesehen sind.

### Bezugszeichenliste

- 1: Leitung
- 2: Aufnahmekörper
- 3: Hülse
- 4: Befestigungselement
- 5: Zentrierelement
- 6: Anordnungsbereich in 2 für 3
- 7: Längsachse von 3
- 8: Vertiefung am Außenumfang von 2
- 9: Angriffsflächen an 2
- 10: Befestigungsabschnitt
- 11: erster Abschnitt von 3
- 12: zweiter Abschnitt von 3
- 13: Rundnut an 2
- 14: Rundsteg an 3
- 15: Längsachse von 3
- 16: freies Ende von 4
- 17: Ausnehmung von 3
- 18: Außenfläche von 4
- 19: Innenfläche von 4
- 20: Vertiefung von 1
- 21: Abschlußdeckel
- 22: Gummidichtung

- B: Blickrichtung
- X: Längsabmessung von 5 koaxial zu 7
- Y: Querabmessung von 5 orthogonal zu 7
- E: Einführrichtung 1 in 2/3

## Patentansprüche

1. Vorrichtung zum Befestigen von Leitungen (1), insbesondere von Kabelschutzschläuchen, mit einem Aufnahmekörper (2) zur Aufnahme der Leitung (1) und einer im Aufnahmekörper (2) anordenbaren Hülse (3), wobei die Hülse (3) beweglich gelagerte Befestigungselemente (4) zum Festlegen der Leitung (1) aufweist,
**dadurch gekennzeichnet**,
daß der Aufnahmekörper (2) an seinem Innenumfang Zentrierelemente (5) zum Zenfrieren der in den Aufnahmekörper (2) eingeführten Leitung (1) aufweist.

2. Vorrichtung nach Anspruch 1, dadurch gekenntzeichnet, daß die Zentrierelemente (5) einem Anordnungsbereich (6) des Aufnahmekörpers (2) für die Hülse (3) im wesentlichen nachgeordnet sind und ggf. geringfügig - ohne Behinderung der Hülse (3) - in den Anordnungsbereich (6) hineinragen.

3. Vorrichtung nach Anspruch 1 oder 2, dadurch gekenntzeichnet, daß die Zentrierelemente (5) voneinander beabstandet und über den Innenumfang des Aufnahmekörpers (2) verteilt angeordnet sind.

4. Vorrichtung nach einem der Ansprüche 1 bis 3, wobei der Querschnitt des Aufnahmekörpers kreisförmig ist, dadurch gekenntzeichnet, daß mindestens drei um 180° versetzte, vorzugsweise vier um 90° versetzte, Zentrierelemente (5) vorgesehen sind.

5. Vorrichtung nach einem der Ansprüche 1 bis 4, dadurch gekennzeichnet, daß sich die Zentrierelemente (5) orthogonal zur Längsachse (7) des Aufnahmekörpers (2), nach innen orientiert, erstrecken.

6. Vorrichtung nach einem der Ansprüche 1 bis 5, dadurch gekennzeichnet, daß sich die Zentrierelemente (5) über einen vorgegebenen Bereich (X) koaxial zur Längsachse (7) des Aufnahmekörpers (2) erstrecken.

7. Vorrichtung nach einem der Ansprüche 1 bis 6, dadurch gekennzeichnet, daß die Querschnittsabmessung (Y) der Zentrierelemente (5) auf den Außenquerschnitt der Leitung (1) derart abgestimmt ist, daß zumindest ein zur Bewegung der Leitung (1) im Aufnahmekörper (2) erforderliches Spiel verbleibt.

8. Vorrichtung nach einem der Ansprüche 1 bis 7, dadurch gekennzeichnet, daß sich die Zentrierelemente (5) in etwa ausgehend vom Anordnungsbereich (6) für die Hülse (3) bis zu einem Befestigungsabschnitt (10) des Aufnahmekörpers (2) erstrecken.

9. Vorrichtung nach einem der Ansprüche 1 bis 8, dadurch gekennzeichnet, daß die Längenabmessung der Hülse (3) in etwa der Hälfte der den Anordungsbereich (6) und den Erstreckungsbereich der Zentrierelemente (5) umfassenden Längenabmessung des Aufnahmekörpers (2) entspricht oder geringfügig über diese hinausgeht.

10. Vorrichtung nach einem der Ansprüche 1 bis 9, dadurch gekennzeichnet, daß die Befestigungselemente (4) als voneinander beabstandete federnde Rastarme mit nach innen gerichteten freien, spitz zulaufenden Enden (16) ausgeführt sind, welche in den Anordnungsbereich der Zentrierelemente (5) hineinragen und daß die Zentrierelemente (5) derart ausgebildet sind, daß die Funktionstüchtigkeit der Befestigungselemente (4) gewährleistet ist.
